Europäisches Patentamt

European Patent Office

Office européen des brevets

(11) Veröffentlichungsnummer: **0 176 882**
**A2**

(12) # EUROPÄISCHE PATENTANMELDUNG

(21) Anmeldenummer: **85111897.6**

(22) Anmeldetag: **20.09.85**

(51) Int. Cl.⁴: **G 01 L 5/00**
**G 01 L 1/04**

(30) Priorität: **29.09.84 DE 3435873**

(43) Veröffentlichungstag der Anmeldung:
**09.04.86 Patentblatt 86/15**

(84) Benannte Vertragsstaaten:
**AT BE CH DE FR GB IT LI LU NL SE**

(71) Anmelder: **Firma Albert Berndes**
**Langekamp 23**
**D-4990 Lübbecke 1(DE)**

(72) Erfinder: **Berndes, Karl-Josef**
**Auf dem Gallenkamp 5**
**D-4990 Lübbecke 1(DE)**

(74) Vertreter: **Stracke, Alexander, Dipl.-Ing. et al,**
**Jöllenbecker Strasse 164**
**D-4800 Bielefeld 1(DE)**

(54) Vorrichtung zum Ermitteln des Deichselauflagegewichtes von Fahrzeuganhängern.

(57) Die Vorrichtung dient einerseits zur Ermittlung des Deichselauflagegewichtes, also der Stützlast, die die Kugel am ziehenden Kraftfahrzeug aufzunehmen hat. Dabei soll die Vorrichtung einerseits als Waage, vorzugsweise als Federwaage, und andererseits als Abdeckkappe für den Kugelkopf dienen. Ist die Waage 2 aufgesetzt und nicht in Gebrauch, so wird eine Abdeckhaube 3 auf die Waage aufgeschoben und an der Waage 2 befestigt. Die Waage selbst nimmt in ihrem Inneren, und zwar in einer inneren Hülse, den Kugelkopf auf. Werden beide miteinander verschlossen, ist ein Abziehen der Vorrichtung nicht möglich, weil Halteelemente, wie Klauen 4 vorgesehen sind. Soll die Stützlast ermittelt werden, wird die Abdeckhaube 3 durch Aufschließen und Abziehen entfernt und anschließend die Kugelkopfkupplung des zu ziehenden Anhängers auf die Waage 2 aufgelegt, wodurch die Stützlast ermittelt wird.

Fig. 3

9/5

firma Albert Berndes, Langekamp 23, 4990 Lübbecke 1

Vorrichtung zum Ermitteln des Deichselauflagegewichtes von Fahrzeuganhängern

- - -

Die Erfindung betrifft eine Vorrichtung zum Ermitteln des
Deichselauflagegewichtes von Fahrzeuganhängern, bestehend
aus einer eine Anzeige aufweisenden Waage. Derartige Vorrichtungen sind an sich bekannt. Sie werden zum Ermitteln
und auch gelegentlichen Kontrollieren des Deichselauflagegewichtes, also der Stützlast von einachsigen oder als
einachsig geltenden Fahrzeuganhängern verwendet und sind
bei den vorbekannten Vorrichtungen an der Deichsel selbst
fest angebracht. Die vorbekannten Waagen sind als Federwaagen ausgebildet und sind im allgemeinen im Standrohr
eines Stützrades für die Deichsel untergebracht. Eine solche Vorrichtung ist in dem DE-GM 75 10 856 beschrieben.

Der erhebliche Nachteil einer solchen Vorrichtung besteht
darin, daß nicht unbedingt immer die Anbringung eines
Stützrades notwendig ist. Vor allem aber ist die Messung
im Deichselbereich bei diesen Vorrichtungen nicht exakt
im Verhältnis zur tatsächlich vorhandenen Stützlast auf
der Kugel' des ziehenden Kraftfahrzeuges. Entscheidend ist
aber die Stützlastmessung, denn das ist der Wert, der das
ziehende Kraftfahrzeug praktisch belastet. Die Meßgenauigkeit ist bei diesen Vorrichtungen deswegen nicht gegeben,
weil die Abstände von der Mitte der Kugel aus gerechnet - jeweils unterschiedlich sind. Diese Abstände berechnen sich von Mitte Kugel bis Stützrad und Mitte Kugel bis Radmitte.

Der vorliegenden Erfindung liegt daher die Aufgabe zugrunde, eine derartige Vorrichtung zu schaffen, die den tatsächlichen Wert der Stützlast am Kraftfahrzeug selbst mißt, wobei gleichzeitig ins Auge gefaßt ist, die Vorrichtung als Schutzkappe für die Kupplungskugel des Kraftfahrzeuges verwendbar zu machen.

Die Erfindung besteht darin, daß die Waage den Kugelkopf des Kraftfahrzeuges übergreifend auf diesen aufsetzbar ist. Damit ist der Meßpunkt für die Stützlast an die exakt richtige Stelle gesetzt und es kann nicht zu Überladungen des Anhängers und damit zu einer Überlastung des ziehenden Kraftfahrzeuges kommen. Außerdem besteht ein Vorteil darin, daß kein Stützrad angeordnet werden muß und sämtliche Probleme, die sich aus der Messung vom Stützrad aus ergeben, fallen fort.

Weitere vorteilhafte Ausgestaltungen einer Vorrichtung zur Ermittlung des Deichselauflagegewichtes sind durch die Unteransprüche gekennzeichnet.

Eine zweckmäßige Weiterbildung des Gegenstandes nach Anspruch 1 ist insbesondere in Anspruch 2 beschrieben. Die Ausbildung der Waage als Federwaage hat den Vorteil, daß sie relativ einfach in der Herstellung ist, daß sie ferner robust ist und wiegegenau. Außerdem ist ihre Herstellung preiswert.

Eine weitere vorteilhafte Weiterbildung des Gegenstandes nach Anspruch 3 ermöglicht die Verwendung der Vorrichtung als Schutzkappe für die Kupplungskugel, wobei die Waage durch eine formangepaßte Abdeckhaube vollständig abdeckbar ist. Durch diese Ausbildung ist es möglich, die Waage ständig auf der Kugel zu haltern, ohne daß die Waage irgendwie dem Wind und dem Wetter ausgesetzt ist. Dadurch kann die Waage ständig mitgeführt werden und bei Gebrauch des Fahrzeuganhängers zunächst durch Ablösen der Abdeckhaube frei gegeben werden. Danach kann die Feststellung der Stützlast der Deichsel durch den Wiegevorgang erfolgen, um dann anschließend die Gesamtvorrichtung von der Kugel zu entfernen. Anschließend kann der Anhänger, und zwar der nicht überladene Anhänger, an das ziehende Kraftfahrzeug angekuppelt werden.

Ferner besteht ein Gedanke der Erfindung darin, die Abdeckhaube an der Waage arretierbar anzuordnen. Dabei kann die Arretierung noch durch ein Schloß gesichert werden, so daß die Waage nicht gestohlen werden kann, insbesondere wenn die Waage mindestens mit einer Verschlußvorrichtung versehen ist, die unter den Kopfbereich des Kugelkopfes greift, in diesem Bereich arretierbar oder in diesem Bereich anbringbar ist. Der Verschluß kann durch die Festlegung der Abdeckhaube erfolgen.
Weitere Kennzeichen und Merkmale ergeben sich aus dem nachfolgend beschriebenen Ausführungsbeispiel.

Das Ausführungsbeispiel der Erfindung wird anhand der Fig. 1 bis 8 nachfolgend erläutert. Es zeigen:

Fig. 1 einen Querschnitt durch die Vorrichtung in arretierter Stellung,

Fig. 2 einen Schnitt nach der Linie II-II der Fig. 1,

Fig. 3 eine Seitenansicht mit geschnittener Abdeckhaube in zwei unterschiedlichen Stellungen, wobei der obere Teil die Verschlußstellung zeigt und der untere Teil die Abzugsstellung,

Fig. 4 einen Blick in Pfeilrichtung IV der Fig. 3,

Fig. 5 die Wiegesituation der Vorrichtung mit angedeutetem Fahrzeuganhänger, Anhängerkugelkupplung und
Fahrzeugzugkugel,

Fig. 6 einen Haltering in Unteransicht,

Fig. 7 den Haltering in Seitenansicht im Schnitt,
Fig. 8 eine als Führungskappe dienende innere Hülse.

Bei dem dargestellten Ausführungsbeispiel der Figuren wird
auf einen Kugelkopf 1 eine Waage 2 aufgesetzt und kann an
diesem Kugelkopf 1 arretiert werden.

Die Vorrichtung dient zur Ermittlung des Deichselauflagegewichtes von Fahrzeuganhängern. Bei den dargestellten
Ausführungsbeispielen ist die Waage 2 als Federwaage ausgebildet und mit einer Abdeckhaube 3 versehen. Statt einer
Federwaage kann beispielsweise auch eine mit Digitalanzeige versehene Waage angeordnet wer-den. Das dargestellte
Ausführungsbeispiel ist aber kostengünstig in der Herstellung, einfach und robust.

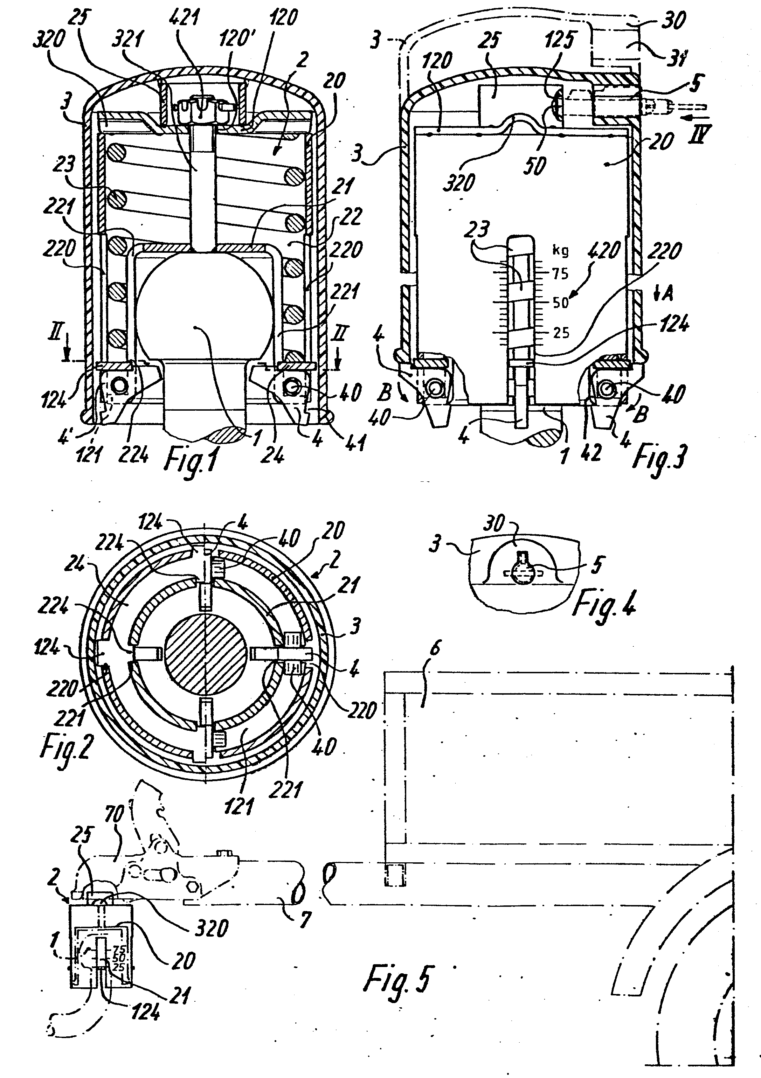

Wie die Fig. 1 zeigt, besteht die Waage 2 aus zwei konzentrisch zueinander liegenden topfartigen Hülsen, und
zwar aus einer äußeren Hülse 20, die auch als Meßhülse
bezeichnet werden kann, und einer inneren Hülse 21, die
auch als Führungskappe bezeichnet werden kann. Die innere
Hülse 21 nimmt den Kugelkopf 1 in sich auf und ist in
ihrer Größe diesem Kugelkopf angepaßt. Beide Hülsen 20, 21
liegen im Abstand im Verhältnis zueinander. Dieser ringförmige Abstandsbereich ermöglicht es, in diesem Raum eine
Druckfeder 23 anzuordnen, wobei diese Druckfeder 23 sich
einerseits am Deckel 120 der äußeren Hülse 20 abstützt und
andererseits auf einem Kragen der inneren Hülse, vorzugsweise aber einem
Haltering 24, der die innere Hülse 21 umgreift. Die innere Hülse 21
weist nach außen gebogene Bodenabschnitte 121 auf, die den Zwischenraum zwischen innerer Hülse 21 und äußerer Hülse 20 untergreifen, wobei die Bodenabschnitte 121 und der Haltering 24 sich in ihren wesentlichen Flächen übergreifen. Zwischen diesen Teilen liegen Achsen 40 von zwischengeordneten Klauen 4, auf denen sich der Haltering 24 abstützt. Diese Klauen 4 sind plattenförmig ausgebildet und ihre Funktion wird später beschrieben. Somit stützt sich die Druckfeder 23 über den Haltering 24 und die zwischengeordneten Klauen 4 auf den nach außen gebogenen Bodenabschnitten 121 der inneren Hülse 21 auf, die ihrerseits als Führungskappe für die Waage dient. Beide Hülsen sind im Kopfbereich geschlossen.

Der Haltering 24 ist seinerseits axial verschiebbar gelagert, aber beim Wiegen in Ruhestellung. Er steht, wie erwähnt, unter Federdruck und greift einerseits mit Nasen 124 in axiale Wandschlitze 220 der äußeren Hülse 20 und andererseits mit Führungsnasen 224 in axiale Wandschlitze 221 der inneren, als Führungskappe dienenden Hülse 21 ein. Die nach außen gerichteten Nasen 124 dienen auch gleichzeitig als Anzeigefinger für die als Federwaage ausgebildete Waage 2. Beim eigentlichen Wiegevorgang verschiebt sich die Hülse 20 nach unten und gleitet an ein oder mehreren Nasen 124 des Halteringes 24 vorbei, die als Anzeigefinger dienen. Dies geschieht beim eigentlichen Meßvorgang, wenn nach Abnahme der Abdeckhaube 3 die Stützlast ermittelt werden soll. Vorzugsweise sind jeweils vier Nasen vorgesehen.

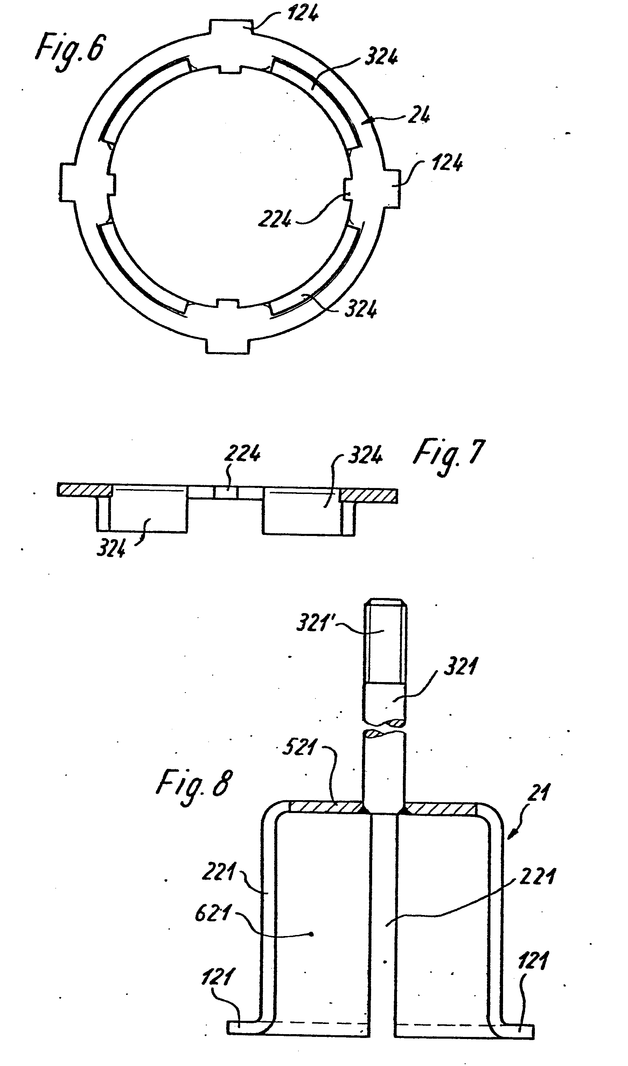

Im oberen Bereich der äußeren, als Meßhülse dienenden Hülse 20 ist der Deckel 120 durch Punktschweißung od.dgl. an der Hülse 20 befestigt und ist auf seiner Oberfläche mit einem Aufsatz 25 versehen, dessen Höhe und Umfang der Kupplungsöffnung einer Kugelkopfkupplung 70 angepaßt ist, die an der Deichsel 7 eines Anhängers 6 befestigt ist. Dabei ist es gleichgültig, wie der Anhänger aussieht (s. Fig. 5). Dieser Aufsatz 25 ist als ein auf dem Deckelbereich der äußeren Hülse 20 aufgesetzter Ring ausgebildet und umgreift den gesamten Mittenbereich. Er dient als Zentrierring bei dem Wiegevorgang und verhindert ein Abrutschen der Kupplung des gezogenen Fahrzeuges.

Der Ring trägt eine Arretierungsausnehmung 125 mit einem Steckschloßbolzen 50 eines in Fig. 3 dargestellten Steckschlosses 5. Durch dieses Steckschloß kann die Abdeckhaube 3 mit der Waage 2 fest verbunden werden, derart, daß kein Diebstahl der Vorrichtung erfolgen kann. Da die Abdeckhaube 3 formangepaßt ist und die Waage 2 vollständig abdeckt, wird diese auch vor Wind und Wetter geschützt. Auf diese Art und Weise ist die Abdeckhaube 3 an der Waage 2 arretierbar festgelegt und, da sie mit einem speziellen Steckschloß 5 versehen ist, kann nur der Benutzer die Abdeckhaube entfernen. Das Steckschloß selber sitzt quer zur Längsachse der Vorrichtung in einem entsprechenden geschlossenen Bereich 30 der Abdeckhaube 3.

Der Deckel 120 der äußeren Hülse 20, die als Meßhülse dient, ist mit Erhebungen, wie Stegen, Hochkröpfungen oder radialen Wülsten 320 versehen, die seitlich einander gegenüberliegen und als Auflageflächen für den aufzulegenden Kupplungsteil dienen. Wenn die Erhöhungen oder radialen Wülste 320 nicht angeordnet wären, läge das bewegliche Verschlußteil der Kugelpfanne auf dem Deckel der äußeren Hülse auf und der Wiegevorgang wäre beeinträchtigt, da sich die Kugelpfanne schließen könnte. Es soll aber im allgemeinen durch die offene Kugelpfanne und den Übergriff über den Aufsatz 25 erstens eine einwandfreie Auflage gewährleistet werden und zweitens ein Abrutschen der Kupplung 70 von der Waage 2 verhindert werden. Gewogen kann aber auch werden, wenn die Kugelkopfkupplung in Schließstellung ist. Die Erhebungen oder Wülste 320 sind für den Fall vorgesehen, daß die Kugelkopfkupplung in Offenstellung ist und die hervorspringedne Kugelpfanne nicht zur Auflage kommen kann. Auch garantieren die Erhebungen oder Wülse 320, daß die Messung immer Mitte Kugel erfolgt.

Die Erhebungen oder Wülse 320 sind in den Fig. 1, 3 unf 5 deutlich zu sehen. In Fig. 5 ist die Auflagesituation gezeigt, wie die Kugelkopfkupplung 70 den Aufsatz 25 umgreift, so daß ein Weglaufen des Anhängers 6 nicht möglich ist, und wie die Seitenflächen der Kugelkopfkupplung auf den radial einander gegenüberliegenden, quer zur Fahrtrichtung gelegten Wülsten 320 aufliegt.

Wie aus Fig. 1 ersichtlich, ist die innere Hülse 21, die als Führungskappe dient, dem am Kraftfahrzeug befestigten Kugelkopf 1 angepaßt, so daß dieser sicher umgriffen wird. Diese innere Hülse trägt einen Führungsbolzen 321 mit obrem Sicherungskopf 421, der seinerseits im Inneren des ringartigen Aufsatzes 25 liegt. Der Führungsbolzen 321 durchquert dabei eine zentrale Bohrung 120' des Deckels 120. Dadurch wird gewährleistet, daß die innere Hülse 21 durch den Deckel 120 der äußeren Hülse 20 einwandfrei axial geführt wird.

Die Fig. 1 zeigt einen normalen Längsschnitt durch die geschlossene Vorrichtung, wobei die Klauen 4 in Schließposition unterhalb der Kugel liegen. Hier sieht man, daß die Klauen 4 Ausklinkungen 41 und 42 an ihren Seitenflächen tragen und zwischen diesen Ausklingungen sich Schnappnocken 4' bilden, wobei die Ausklinkungen der Größe und Breite des Halteringes 24 angepaßt sind.

Fig. 2 zeigt einen Schnitt nach den Linien II-II der Fig.1, wobei die linke Seite einen Teil, und zwar die Hälfte des Halteringes 24 deutlich macht, wobei auch die als Anzeigevorsprünge dienenden Nasen 124 und die Führungsnasen 224 zu sehen sind.

Auf der rechten Seite der Fig. 2 ist der Haltering 24 weggeschnitten, und somit ist der Blick frei auf die Klauen 4,
deren kleine geführte Kippachsen 40 jeweils im Spalt zwischen innerer Hülse 21 und äußerer Hülse 20 liegen. Sie
werden, wie erwähnt, von oben durch den Haltering 24 und
von unten durch die Bodenabschnitte 121 der inneren Hülse
21 auf ihrem Platz gehalten. Die Klauen 4 sind dabei frei
schwenkbeweglich in den entsprechenden Axialschlitzen 220
und 221 der Hülsen 20 und 21 gelagert.

In Fig. 3 sind auch zwei unterschiedliche Stellungen gezeigt, und zwar die untere Partie ist mit einer etwas hochgezogenen Abdeckhaube 3 dargestellt, die im oberen Bereich
nur strichpunktiert in dieser Stellung angedeutet ist, während der ausgezogene obere Bereich der Abdeckhaube 3 in
Schließposition gezeigt ist, um deutlich zu machen, wie
das Steckschloß 5 wirkt. Das Steckschloß 5 selbst wird quer
eingeschoben in den geschlossenen Bereich 30 mit Ausnehmung 31 der topfartigen Abdeckhaube 3 und greift in den Ring 25.

Die äußere Hülse 20 ist bei dieser Fig. 3 deutlich von
außen gezeigt, da sie im wesentlichen ungeschnitten ist.
Hier ist einer ihrer axialen Wandschlitze 220 zu sehen
und auch die entsprechende Skala 420, die vorhanden sein
muß, um den Meßvorgang zu ermöglichen. Ferner ist die als
Meßfinger dienende Nase 124 ersichtlich, genauso wie die
unter dem Meßfingerbereich oder Nasenbereich liegende
Klaue 4. Die Klauen 4 stehen bei der Position der Fig. 3
in Offenstellung. Diese Position wird erreicht, wenn normalerweise die Kugel 1 herausgezogen wird, was nur möglich
ist, wenn die Abdeckhaube 3 abgezogen ist und somit das
Steckschloß 5 entfernt worden ist. Man könnte auch die
untere Position annehmen als kurz vor dem Aufsetzen der Gesamtvorrichtung auf die Kugel 1, wobei durch Herunterdrücken der Abdeckhaube 3 in Pfeilrichtung A ein Druck auf die äußeren Enden der winkelförmig gebogenen Klauen 4 erfolgt, die dann anschließend oder dabei in Pfeilrichtung B verschwenken und sich in die Position der Fig. 1 legen. Durch entsprechende Ausklinkungen 41, 42 legen sie sich formschlüssig unter den Haltering 24, wobei die Ausklinkungen 41, 42 im Winkel von etwas weniger als 90° zueinanderstehen.

In Fig. 4 ist noch einmal der Steckschloßbereich deutlich zu sehen mit Abdeckhaube 3 und geschlossenem Bereich 30 derselben. Die exakte Ausbildung dieses Bereiches ist variierbar.

Wie bereits erwähnt, zeigt Fig. 5 die Aufsetz- und Wiegeposition. Durch Druck der Kugelkopfkupplung 70 auf die Wülste 320 der äußeren Hülse 20, und zwar auf den Deckelbereich derselben, wird der Druck auf die Feder 23 weitergegeben, die durch den Gegendruck der inneren Hülse 21 und des Kugelkopfes 1 bewirkt, daß die äußere Hülse 20 herabfährt und sich praktisch die Federwaage zusammendrückt, wodurch die Nase 124 des Halteringes 24 in der herunterfahrenden Meßhülse 20 verschiebt und in der Skala anzeigt, wie stark der Auflagedruck ist.

Der Wiegevorgang kann nur, wie aus Fig. 5 hervorgeht. mit abgenommener Abdeckhaube 3 erfolgen.

In Fig. 6+7 ist der Haltering 24 noch einmal deutlicher dargestellt mit Nasen 124 und Führungsnasen 224, sowie den als Ringsegmente ausgebildeten Kragenteilen 324. Es sind vorzugsweise vier Nasen 124 und vier Nasen 224 und vier Kragenteile 324 vorhanden. Die Kragenteile bilden die Führungsmanschette des Halteringes 24 an der inneren Hülse 21. Diese Kragenmanschette ist gut in Fig. 7 ersichtlich. Die Nasen 124 und 224 liegen in den einander gegenüberliegenden Schlitzen 220 und 221 der haubenartigen Hülsen 20, 21 (Fig. 1).

In fig. 8 ist die innere Hülse noch einmal deutlicher herausgezeichnet, die mit 21 in der Zeichnung bezeichnet ist. Die achsialliegenden Wandschlitze 221 sind bis ganz heruntergeführt und sind ebenfalls jeweils paarweise einander gegenüberliegend angeordnet. Die Zwischenabschnitte sind nach außen gekrümmt und bilden die horizontalliegenden Bodenabschnitte 121, auf denen letztlich der Federdruck der Feder 23 liegt.

Ferner ist der Führungsbolzen 321 zu sehen, der im oberen Bereich mit einem Gewindeteil 321' versehen ist und der am Deckel 521 der inneren Hülse 21 angeschweißt ist. Der Deckel 521 und die Seitenwände der inneren Hülse 21 begrenzen den Raum, in dem eingepaßt die Zugkugel und der Kugelkopf 1 des ziehenden Kraftfahrzeuges liegt. Damit die Hülse 21 nicht auseinandergespreizt werden kann, ist auch, wie bereits erwähnt, der Haltering 24 zwischen den Hülsen angeordnet und greift mit seinen Nasen 124 und 224 jeweils in die Schlitzbereiche ein. Die Länge des Bolzens 321 muß der grösseren Höhe der Hülse 20 entsprechen.

Wie erwähnt ist der Gedanke der Erfindung nicht auf das dargestellte Ausführungsbeispiel beschränkt. So sind Variationen denkbar und möglich. Wesentlich ist die Anordnung einer Kugelkopfabdeckung in Kombination mit einer Waage, vorzugsweise einer Federwaage, die aber auch nicht unbedingt eine Wendelform haben muß, sondern auch eine andere Federgestalt haben kann. Dabei soll die Kugelkopfabdeckung einerseits die Kugel schützen und andererseits gewährleisten, daß die Waage, gleichgültig wie sie immer aussehen mag, ständig mitgeführt wird. Dabei greift die Kugel in das Innere der Waage 2 ein, wobei ein Teil, und zwar der aufzusetzende Teil dieser Waage 2, im vorliegenden Fall die innere Hülse 21, die Kugel in sich aufnimmt. Der eigentliche wiegende Teil wird von dieser inneren Hülse 21 immer getragen. Dabei kann die innere Hülse 21 an der Kugel in dieser Stellung arretiert werden. Auch diese Arretierung oder Verschlußvorrichtung kann anders ausgebildet werden als dargestellt. Die dargestellten Klauen zeigen nur eine mögliche Art der Arretierung. Wie bereits erwähnt, sind die Klauen 4 selbst winkelförmig ausgebildet und tragen im Winkelbereich die Schanppnocken 4', so daß eine exakte Überschnappstellung von der Offenstellung in die Verschlußstellung möglich ist, indem beim Verschwenken der Klauen 4 der unter Federdruck stehende Haltering 24 jeweils hochgedrückt wird und wieder in ein formschlüssiges Bett der Ausklinkungen 41, 42 einschnappt. Wesentlich ist dabei, daß die Verschlußvorrichtung, gleichgültig nun wie sie aussieht, immer unter den Kopfbereich des Kugelkopfes 1 greift, da der Kugelkopf selbst die Arretierung ermöglicht. Es kann auch eine zusätzliche Verschlußvorrichtung vorgesehen werden. Die Arretierung über die verschließbare Abdeckhaube 3 ist aber besonders vorteilhaft.

Ferner ist es möglich, daß die innere Hülse 20 direkt Anzeigefinger trägt und z.B. kein Haltering 24 vorgesehen ist, wenn z.B. eine andere Arretierung vorgesehen wird als sie hier dargestellt ist.

Die offenbarten Merkmale und Kombinationen werden, soweit sie gegenüber dem Stand der Technik neu sind, als erfindungswesentlich angesehen, insbesondere auch die vorteilhaften Ausgestaltungen, die in den Unteransprüchen gekennzeichnet sind.

P a t e n t a n s p r ü c h e
================================

1. Vorrichtung zum Ermitteln des Deichselauflagegewichtes
   von Fahrzeuganhängern, bestehend aus einer eine Anzeige
   aufweisende Waage (2), d a d u r c h  g e k e n n -
   z e i c h n e t ,  daß die Waage (2) den Kugelkopf (1)
   eines Kraftfahrzeuges übergreifend, auf diesen aufsetzbar
   ist.

2. Vorrichtung nach Anspruch 1, dadurch gekennzeichnet,
   daß die Waage (2) als Federwaage ausgebildet ist.

3. Vorrichtung nach Anspruch 1, dadurch gekennzeichnet,
   daß die Waage (2) durch eine ihr formangepaßte, topfartige
   Abdeckhaube (3) vollständig abdeckbar und die Waage an dem
   Kugelkopf (1) festlegbar bzw. arretierbar ist.

4. Vorrichtung nach Anspruch 1 oder 2, dadurch gekennzeichnet,
   daß der Kugelkopf (1) in das Innere der Waage (2) eingreift,
   wobei ein Teil derselben, vorzugsweise eine innere Hülse (21),
   den Kugelkopf führend in sich aufnimmt.

5. Vorrichtung nach einem oder mehreren der Ansprüche 1 bis 4,
   dadurch gekennzeichnet, daß die Abdeckhaube (3) an der Waage
   (2) arretierbar ist und die gesamte Vorrichtung als Kugelschutzkappe ausgebildet ist, wobei die Abdeckhaube (3) vorzugsweise mit einem Steckschloß (5) versehen ist, dessen
   Steckschloßbolzen (50) od.dgl. in eine Öffnung oder Bohrung
   (125) eines Teiles der Waage (2) einschiebbar und in dieser
   arretierbar ist.

6. Vorrichtung nach einem oder mehreren der Ansprüche 1 bis 5, dadurch gekennzeichnet, daß die als Federwaage ausgebildete Waage (2) aus zwei konzentrisch zueinanderliegenden, topfartigen Hülsen (20,21) besteht, von denen die innere Hülse (21) dem aufzunehmenden Kugelkopf (1) in ihrer Größe angepaßt ist und in der äußeren, als Meßhülse dienenden Hülse (20) liegt, die ihrerseits gegen die Wirkung einer Feder (23) axial die innere Hülse (20) umgreifend beweglich gelagert ist, und die innere Hülse selbst bzw. ein von ihr getragener Teil, vorzugsweise ein Haltering (24), mindestens eine Nase (124) als Anzeigefinder aufweist, der jeweils in einem axialen Wandschlitz (220) der Mantelfläche der äußeren als Meßhülse dienenden Hülse (20) gleitbar gelagert ist.

7. Vorrichtung nach einem oder mehreren der Ansprüche 1 bis 6, dadurch gekennzeichnet, daß die Waage (2) in ihrem Deckelbereich mit einem Aufsatz (25) versehen ist, dessen Höhe und Umfang etwa der Kupplungsöffnung einer Kugelkopfkupplung (70) angepaßt ist, wobei der Aufsatz (25) vorzugsweise als ein auf dem Deckelbereich der Waage (2) aufgesetzter Ring ausgebildet ist.

8. Vorrichtung nach einem oder mehreren der Ansprüche 1 bis 7, dadurch gekennzeichnet, daß die Waage (2) bzw. die als Meßhülse dienende äußere Hülse (20) derselben einen Deckel (120) aufweist, der mit Erhebungen, wie Stegen, Hochkröpfungen, radialen Wülsten (320) od.dgl. versehen ist, die als Auflageflächen für die aufzulegende Kugelkopfkupplung dienen.

9. Vorrichtung nach einem oder mehreren der Ansprüche 1 bis 8, dadurch gekennzeichnet, daß die als Meßhülse dienende äußere Hülse (20) der Waage (2) im Abstand zur erheblich im Querschnitt und in der Höhe kleineren als Führungskappe dienenden, der Kugel (1) angepaßten inneren Hülse (21) angeordnet ist und im Abstandsbereich die Druckfeder (23) liegt, die sich auf einem unteren Kragen der inneren Hülse (20) oder auf einem den Abstand zur äußeren Hülse schließenden unteren Haltering (24) abstützt und der Haltering (24) gleichzeitig als Basisring für die Druckfeder (23) der Waage (2)
vorgesehen ist, wobei er in axialer Richtung in beiden Hülsen (20,21) geführt ist.

10. Vorrichtung nach einem oder mehreren der Ansprüche 1 bis 9,
dadurch gekennzeichnet, daß der quer zu den Hülsen (20,21)
liegende Haltering (24) an seiner Mantelfläche einen oder
mehrere Kragenteile (324) aufweist, die die innere, als
Führungskappe dienende Hülse (21) umgreifen und Ringsegmente bilden, wobei zwischen den Segmentteilen in den freien Zwischenräumen Führungsnasen (224) des Halteringes (24)
angeordnet sind, die sich zum Zentrum der Waage (2) erstrecken und in axialen Wandschlitzen (221) der inneren
Hülse (21) liegen.

11. Vorrichtung nach einem oder mehreren der Ansprüche 1 bis 10,
dadurch gekennzeichnet, daß die Waage (2), vorzugsweise
Federwaage, mindestens mit einer Arretierungs- oder Verschlußvorrichtung (4,4',124) versehen ist, die unter den
Kopfbereich des Kugelkopfes (1) des ziehenden Kraftfahrzeuges greift und in diesem Bereich arretierbar oder in
diesem Bereich anbringbar ist.

12. Vorrichtung nach Anspruch 11, dadurch gekennzeichnet, daß
die Arretierungs- oder Verschlußvorrichtung aus mindestens
zwei, vorzugsweise vier Halteklauen (4) besteht, die im
Zwischenraum zwischen innerer und äußerer Hülse (20,21) in
vertikaler Richtung schwenkbar angeordnet liegen, wobei sie
mit einem ihrer Enden unter die Kugel (1) einschwenkbar sind
und die aufgeschobene Abdeckhaube (3) in ihrer Arretierungsstellung festhaltbar sind, wobei die Klauen (4) vorzugsweise
als ebene Platten mit Ausklinkungen (41,42) an ihren Seitenflächen ausgebildet sind und etwa einen rechten Winkel von

- 4 -

**0176882**

weniger als 90° bilden, dessen Eckbereich abgerundet ist,
derart, daß der Eckbereich einen Schnappnocken (4') bildet
und die Klauen (4) in den Schlitzen (220) der äußeren
Hülse (20) und in den Schlitzen (221) der inneren Hülse (21)
schwenkbar geführt sind, sowie über den Haltering (24) unter der Wirkung der Feder (23) der Waage (2) stehen,
wobei der Haltering (24) jeweils in beiden Grundstellungen
der Klauen (4) auf den Ausklinkungen (41,42) der Klauen (4)
aufliegt.

13. Vorrichtung nach einem oder mehreren der Ansprüche 1 bis 12,
dadurch gekennzeichnet, daß die Ausklinkungen (41,42) der
Klauen (4) sich jeweils an den Seitenkanten des Halteringes (24) abstützen, wobei die Klauen (4) formschlüssige
Betten für den Haltering (24) bilden und bei Arretierung
der Abdeckhaube (3) durch ein Schloß (5) eine Verriegelung
der Gesamtvorrichtung auf der Kugel (1) bilden.

14. Vorrichtung nach einem oder mehreren der Ansprüche 1 bis 13,
dadurch gekennzeichnet, daß die topfartige innere Hülse (21)
in ihrem Kopfbereich als Vertikalführung einen Führungsbolzen (321) mit Sicherungskopf (421) trägt, der vorzugsweise im Inneren des ringartigen Aufsatzes (25) liegt und
eine zentrale Bohrung )120') des Deckels (120) der äußeren
Hülse (20) durchquert.

0176882

Fig.1

Fig.2

Fig.3

Fig.4

Fig.5

**Fig.6**

124
324
24
124
224
324

**Fig.7**

224
324
324

**Fig.8**

321'
321
521
21
221
221
621
121
121